# EUROPEAN PATENT APPLICATION

(11) **EP 4 765 950 A1**
(43) Date of publication of application: **24.06.2026**
(21) Application number: 24892794.9
(22) Date of filing: 26.06.2024
(51) Int. Cl.: H04W 36/02

(54) **WIRELESS COMMUNICATION METHOD AND APPARATUS, COMMUNICATION NODE, AND STORAGE MEDIUM**

(30) Priority: 24.11.2023 CN 202311601083
(71) Applicant: ZTE Corporation, Shenzhen, Guangdong 518057 (CN)
(72) Inventor: LIU, Yuze, Shenzhen, Guangdong 518057 (CN); YOU, Shilin, Shenzhen, Guangdong 518057 (CN); LIU, Peilin, Shenzhen, Guangdong 518057 (CN); XING, Zhen, Shenzhen, Guangdong 518057 (CN); ZHANG, Leyi, Shenzhen, Guangdong 518057 (CN); MA, Wei, Shenzhen, Guangdong 518057 (CN)
(74) Representative: Aipex B.V.
(86) International application number: PCT/CN2024/101553
(87) International publication number: WO 2025/107629

(57) **Abstract**

Provided are a wireless communication method and apparatus, a communication node, and a storage medium. The method is applied to a secondary node in dual connectivity communication. The method includes receiving secondary node key modification indication information; and performing cell handover according to the secondary node key modification indication information. This avoids traffic interruption in communication between the secondary node and the UE caused by key switching, achieves UE-transparent secondary node key switching in dual connectivity communication, and improves the system communication stability.

## Description

### TECHNICAL FIELD

The present application relates to the field of communication technology, particularly a wireless communication method and apparatus, a communication node, and a storage medium.

### BACKGROUND

In a communication network, encryption between a user equipment (UE) and a base station is based on a key between them. For example, in a 5G network, communication between a base station and a UE is encrypted based on the Key of the Next Generation Node B (KgNB).

In a dual connectivity scenario, a UE establishes and performs communicative connection with two different base stations simultaneously. A key in the UE is shared with a key in the master node (MN), and a key update in the MN does not affect communication between the UE and the MN. If a Packet Data Convergence Protocol (PDCP) count is about to roll over during communication between the UE and the secondary node (SN), it is required for the network to update the key. In this case, the SN sends an SN Modification Required message including a key modification indication to the MN; and then the MN sends an SN Modification Request message including a new key serial number (KSN) to the SN, thereby completing the key update of the SN.

It is required for the SN to use the new key for communication after the key update. However, if traffic data is being transmitted between the UE and the SN, the key update causes temporary interruption of the traffic data, thereby resulting in traffic interruption and degrading the communication stability.

### SUMMARY

The present application provides a wireless communication method and apparatus, a communication node, and a storage medium to solve the problem that communication stability is degraded due to interruption of traffic data between a UE and an SN during an SN key update in a dual connectivity scenario.

To achieve this object, embodiments of the present application provide a wireless communication method applied to a secondary node in dual connectivity communication. The method includes receiving secondary node key modification indication information; and performing cell handover according to the secondary node key modification indication information.

To achieve this object, embodiments of the present application provide a wireless communication method applied to a master node in dual connectivity communication. The method includes sending secondary node key modification indication information to a secondary node to enable the secondary node to perform cell handover according to the secondary node key modification indication information; receiving secondary node key modification response information and constructing radio resource connection configuration information according to the secondary node key modification response information; and sending the radio resource connection configuration information to a terminal device corresponding to the secondary node to enable the terminal device to be handed over to a post-handover cell of the secondary node according to the radio resource connection configuration information.

To achieve this object, embodiments of the present application provide a wireless communication method applied to a terminal device in dual connectivity communication. The method includes receiving radio resource connection configuration information; and performing cell handover according to the radio resource connection configuration information. The radio resource connection configuration information is information constructed by a master node according to secondary node key modification response information and a secondary node counter. The secondary node key modification response information is response information sent after a secondary node performs cell handover according to secondary node key modification indication information. The secondary node key modification response information includes target cell configuration information.

To achieve this object, embodiments of the present application provide a wireless communication apparatus applied to a secondary node in dual connectivity communication. The apparatus includes an indication information receiving module configured to receive secondary node key modification indication information; and a first cell handover module configured to perform cell handover according to the secondary node key modification indication information.

To achieve this object, embodiments of the present application provide a wireless communication apparatus applied to a master node in dual connectivity communication. The apparatus includes an indication information sending module configured to send secondary node key modification indication information to a secondary node to enable the secondary node to perform cell handover according to the secondary node key modification indication information; a configuration information construction module configured to receive secondary node key modification response information and construct radio resource connection configuration information according to the secondary node key modification response information; and a configuration information sending module configured to send the radio resource connection configuration information to a terminal device corresponding to the secondary node to enable the terminal device to be handed over to a post-handover cell of the secondary node according to the radio resource connection configuration information.

To achieve this object, embodiments of the present application provide a wireless communication apparatus applied to a terminal device in dual connectivity communication. The apparatus applied to the terminal device includes a configuration information receiving module configured to receive radio resource connection configuration information; and a second cell handover module configured to perform cell handover according to the radio resource connection configuration information. The radio resource connection configuration information is information constructed by a master node according to secondary node key modification response information and a secondary node counter. The secondary node key modification response information is response information sent after a secondary node performs cell handover according to secondary node key modification indication information. The secondary node key modification response information includes target cell configuration information.

To achieve this object, embodiments of the present application provide a communication node. The communication node includes a memory, a processor, a program stored in the memory and executable on the processor, and a data bus for implementation of connection and communication between the processor and the memory. When executed by the processor, the program causes the processor to perform the wireless communication method of any embodiment of the present application.

To achieve this object, embodiments of the present application provide a storage medium for computer-readable storage. The storage medium stores at least one program executable by at least one processor to cause the at least one processor to perform the wireless communication method of any embodiment of the present application.

According to the wireless communication method and apparatus, the communication node, and the storage medium of embodiments of the present application, secondary node key modification indication information is received; and cell handover is performed according to the secondary node key modification indication information. According to this solution, in a case where key switching is required for the secondary node in a dual connectivity communication scenario, key modification and cell handover for the secondary node are performed according to the received secondary node key modification indication information. Since cell handover is associated with a corresponding information buffering mechanism, ongoing traffic data transmission is not interrupted during key switching of the secondary node. This avoids traffic interruption in communication between the secondary node and the UE caused by key switching, achieves UE-transparent secondary node key switching in dual connectivity communication, and improves the system communication stability.

### BRIEF DESCRIPTION OF DRAWINGS

FIG. 1 is a timing diagram illustrating a key request by an SN in a dual connectivity scenario according to the related art.
FIG. 2 is a flowchart of a wireless communication method according to embodiments of the present application.
FIG. 3 is a flowchart of a wireless communication method according to embodiments of the present application.
FIG. 4 is a flowchart of a wireless communication method according to embodiments of the present application.
FIG. 5 is a flowchart of wireless communication for a key update initiated by a secondary node according to embodiments of the present application.
FIG. 6 is a flowchart of wireless communication for a key update initiated by a master node according to embodiments of the present application.
FIG. 7 is a diagram illustrating the structure of a wireless communication apparatus according to embodiments of the present application.
FIG. 8 is a diagram illustrating the structure of a wireless communication apparatus according to embodiments of the present application.
FIG. 9 is a diagram illustrating the structure of a wireless communication apparatus according to embodiments of the present application.
FIG. 10 is a diagram illustrating the structure of a communication node according to embodiments of the present application.

### DETAILED DESCRIPTION

Objects, technical solutions, and advantages of the present application are more apparent from a detailed description of embodiments of the present application in conjunction with the drawings. It is to be noted that if not in collision, the embodiments of the present application and features therein may be combined with each other in any manner.

The operations illustrated in the flowcharts among the drawings may be performed by, for example, a computer system capable of executing a set of computer-executable instructions. Although logical sequences are shown in the flowcharts, the shown or described steps may be performed in sequences different from those described herein in some cases.

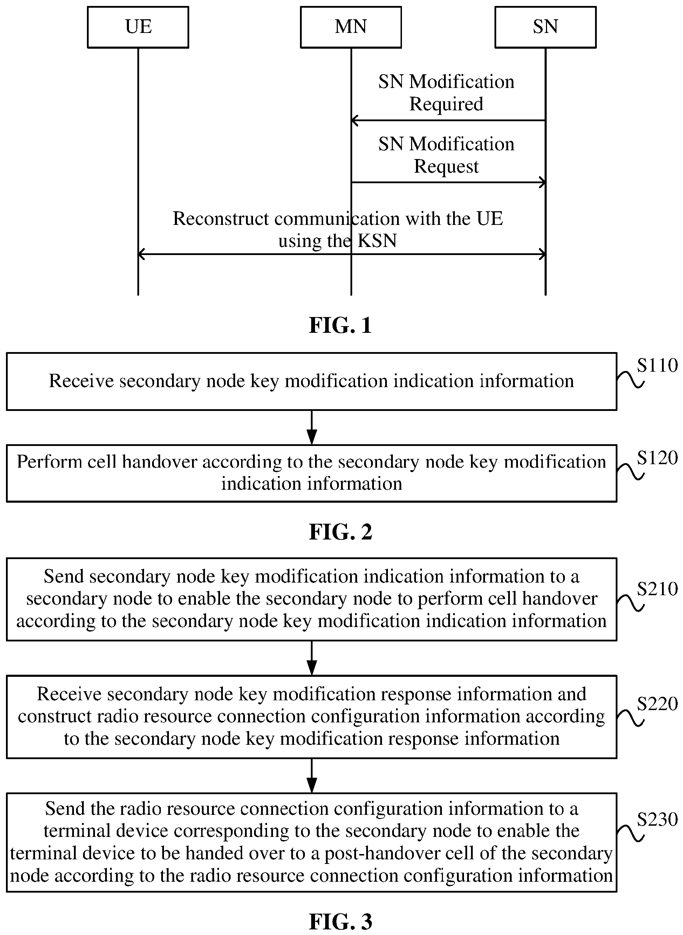

In a communication network, to establish a dual connectivity communication scenario, a UE, an MN, and an SN first complete an SN addition process to establish a link between the UE and the SN. During communication between the UE and the SN, the PDCP count is gradually incremented and rolls over when reaching the maximum value. At this time, the SN requires a new key to encrypt the transmitted data. FIG. 1 is a timing diagram illustrating a key request by an SN in a dual connectivity scenario according to the related art. See FIG. 1. The SN sends an SN Modification Required message to the MN. The SN Modification Required message includes key modification indication information. After receiving the SN Modification Required message, the MN assigns a new KSN to the SN according to the key modification indication information and sends an SN Modification Request message including the KSN to the SN so that the SN can update the key to the new KSN according to the SN Modification Request message and reconstructs communication with the UE using the new KSN. However, before the SN updates the key for the cell used for communication with the UE, communication between the UE and the SN is required to be interrupted. If a service still exists between the UE and the SN during key updating, temporary interruption of the service is caused, leading to traffic interruption and degradation of communication stability.

To address this problem, the present application provides a wireless communication method that enables UE-transparent SN key updating and improves communication stability.

It is to be understood that the wireless communication method of each embodiment of the present application is applicable to the 4th-generation mobile communication technology (4G) such as long-term evolution (LTE); or the 5th-generation mobile communication technology (5G) such as 5G new radio access technology (New RAT) and cloud radio access network (CRAN); or the future 6th-generation mobile communication technology. This is not limited in each embodiment of the present application.

In an example embodiment, FIG. 2 is a flowchart of a wireless communication method according to embodiments of the present application. The method is applicable to SN key updating in a dual connectivity scenario. The method can be performed by a wireless communication apparatus. The apparatus may be implemented by software and/or hardware and integrated in a communication node. For example, the communication node may be a base station as an SN in the dual connectivity communication scenario.

As shown in FIG. 2, the wireless communication method of this embodiment of the present application includes S110-S120.

In S110, secondary node key modification indication information is received.

In this embodiment, the secondary node key modification indication information may be understood as information sent by the MN to the SN to instruct the SN to perform key modification.

Specifically, in a case where the SN determines that SN key updating is required or the MN determines that SN key updating is required, the MN generates secondary node key modification indication information including a new key required by the SN and including cell handover indication information for instructing the SN to perform cell handover during key switching so that the SN can receive the secondary node key modification indication information from the MN.

In S120, cell handover is performed according to the secondary node key modification indication information.

Specifically, after receiving the secondary node key modification indication information, the SN parses the secondary node key modification indication information and selects, from cells corresponding to the SN and according to the cell handover indication information in the secondary node key modification indication information, a target cell that is different from the current cell and satisfies communication requirements, so that cell handover from the current cell to the target cell can be performed; and the SN uses the new secondary node key included in the secondary node key modification indication information as a secondary node key required for data communication in the target cell.

According to the wireless communication method of this embodiment of the present application, secondary node key modification indication information is received; and cell handover is performed according to the secondary node key modification indication information. According to this solution, in a case where key switching is required for the secondary node in a dual connectivity communication scenario, key modification and cell handover for the secondary node are performed according to the received secondary node key modification indication information. Since cell handover is associated with a corresponding information buffering mechanism, ongoing traffic data transmission is not interrupted during key switching of the secondary node. This avoids traffic interruption in communication between the secondary node and the UE caused by key switching, achieves UE-transparent secondary node key switching in dual connectivity communication, and improves the system communication stability.

In an embodiment, in a case where the secondary node determines that key updating is required, before receiving the secondary node key modification indication information, the method also includes sending secondary node key modification request information to a master node.

In this embodiment, the secondary node key modification request information may be understood as key update indication information sent by the SN to the MN to indicate that the SN requires a new key.

Specifically, in a case where the SN determines that SN key updating is required, the SN generates the key modification request information including the key update indication information and sends the key modification request information to the corresponding MN to request the MN to provide a new key.

In an embodiment, sending the secondary node key modification request information to the master node includes in response to satisfying a secondary node key update condition, sending the secondary node key modification request information to the master node.

In this embodiment, the secondary node key update condition may be understood as a condition preset according to actual situations and configured to trigger the SN to perform key updating for the cell that is currently in communication in the dual connectivity scenario. By way of example, the secondary node key update condition includes that a PDCP COUNT is greater than a preset rollover threshold and may also be another condition for triggering SN key updating. This is not limited in each embodiment of the present application. By way of example, the preset rollover threshold may be a value immediately preceding rollover of the PDCP COUNT or may be a value smaller than a PDCP COUNT rollover value and set according to actual situations. This is not limited in each embodiment of the present application.

Specifically, in a case where the SN satisfies the secondary node key update condition, the SN determines that SN key updating is required and generates the key modification request information including the key update indication information and sends the key modification request information to the corresponding MN to request the MN to provide a new key.

In an embodiment, performing the cell handover according to the secondary node key modification indication information includes performing the cell handover according to a cell handover indication in the secondary node key modification indication information.

In an embodiment, after performing the cell handover according to the secondary node key modification indication information, the method also includes determining a post-handover cell as a target cell; and generating secondary node key modification response information according to the target cell and sending the key modification response information to the master node to enable the master node to configure radio resource connection for a terminal device corresponding to the secondary node according to the secondary node key modification response information.

In this embodiment, the secondary node key modification response information may be understood as information sent by the SN to the MN to respond to the secondary node key modification indication information and to notify the MN of the cell handover result of the SN.

Specifically, after the SN performs cell handover according to the secondary node key modification indication information, the post-handover cell may be regarded as a cell in which communication is to be performed using the new key in the secondary node key modification indication information or may be regarded as a cell with which the UE is required to establish a link in subsequent communication. In this case, the post-handover cell is determined as the target cell. Information required for accessing the target cell is written into the secondary node key modification response information fed back by the SN to the MN. After the SN sends the secondary node key modification response information to the corresponding MN, the MN can perform radio resource connection configuration for the UE corresponding to the SN according to the information for accessing the target cell and contained in the secondary node key modification response information so that the UE can access the target cell in subsequent communication to perform data transmission according to this information.

In an embodiment, the secondary node key modification response information includes target cell configuration information for accessing the target cell.

In this embodiment, the target cell configuration information may be understood as information required for accessing the target cell. By way of example, the target cell configuration information may include a target cell identifier. This is not limited in this embodiment of the present application.

In an embodiment, after sending the key modification response information to the master node, the method also includes in response to receiving radio resource connection configuration response information from the terminal device, activating a new secondary node key in the secondary node key modification indication information to enable data transmission with the terminal device based on the new secondary node key.

In this embodiment, the radio resource connection configuration response information may be understood as information sent by the UE to the SN to notify the SN that the UE has switched to the target cell and can use the new secondary node key to re-establish communication with the SN in the target cell.

Specifically, after the SN sends the key modification response information to the MN, the SN waits for the UE to complete cell handover and radio resource connection configuration. In a case where the radio resource connection configuration response information from the UE is received, it may be considered that the UE has been handed over to the target cell and has confirmed the new secondary node key that can be used for communication with the target cell. At this time, the new secondary node key carried in the secondary node key modification indication information can be activated in the target cell of the SN so that the UE and the SN can perform data transmission based on the new secondary node key.

In the wireless communication method of this embodiment of the present application, in a case where the SN is required to perform key switching and receives the secondary node key modification indication information after requesting a key from the MN or in a case where the MN is required to perform key switching for the SN and sends the secondary node key modification indication information to the SN, key modification and cell handover are performed for the SN according to the received secondary node key modification indication information, and after the cell handover is completed, the target cell configuration information corresponding to the target cell is fed back to the MN so that the MN configures the UE according to the target cell configuration information and enables the UE to complete cell handover corresponding to the SN, thereby enabling the UE and the SN to perform data transmission using the new key in the post-handover cell. Cell handover is associated with a corresponding information buffering mechanism. Therefore, during key switching of the secondary node, interruption of traffic data in transmission does not occur, thereby avoiding traffic interruption in communication between the secondary node and the UE caused by key switching, achieving UE-transparent secondary node key switching in dual connectivity communication, and improving the system communication stability.

In an example embodiment, FIG. 3 is a flowchart of a wireless communication method according to embodiments of the present application. The method is applicable to SN key updating in a dual connectivity scenario. The method can be performed by a wireless communication apparatus. The apparatus may be implemented by software and/or hardware and integrated in a communication node. For example, the communication node may be a base station as an MN in the dual connectivity communication scenario.

As shown in FIG. 3, the wireless communication method of this embodiment of the present application includes S210-S230.

In S210, secondary node key modification indication information is sent to a secondary node to enable the secondary node to perform cell handover according to the secondary node key modification indication information.

Specifically, in a case where the SN is determined to be required to perform key switching, the secondary node key modification indication information carrying a new secondary node key required by the SN and a cell handover indication is sent to the SN so that the SN can perform cell handover in response to the cell handover indication in the secondary node key modification indication information and can feed back the cell handover result to the MN.

In S220, secondary node key modification response information is received, and radio resource connection configuration information is constructed according to the secondary node key modification response information.

In this embodiment, the radio resource connection configuration information may be understood as information sent by the MN to the UE to notify the UE of the new cell to which the corresponding communicating SN is switched and the configuration information required for the UE to access the new cell and perform encrypted communication with the new cell.

Specifically, in a case where the MN receives the secondary node key modification response information, it may be considered that the SN has completed cell handover to the new cell and configuration of the new secondary node key in the new cell. The MN parses the secondary node key modification response information to determine the new cell to which the SN is handed over and the information required to access the new cell so that the MN can construct the radio resource connection configuration information for the UE corresponding to the SN according to the information required to access the new cell in the secondary node key modification response information and information related to secondary node key modification.

In S230, the radio resource connection configuration information is sent to a terminal device corresponding to the secondary node to enable the terminal device to be handed over to a post-handover cell of the secondary node according to the radio resource connection configuration information.

Specifically, the MN sends the constructed radio resource connection configuration information to the UE corresponding to the SN so that after parsing the radio resource connection configuration information, the UE can perform cell handover according to the information included in the radio resource connection configuration information and used for accessing the new cell to which the SN is handed over. Thus, ongoing traffic data transmission between the UE and the SN is not interrupted during the cell handover. In addition, because the radio resource connection configuration information includes information related to the SN key modification, after parsing the radio resource connection configuration information, the UE can determine the new key of the SN. Accordingly, after the UE is handed over to the cell to which the SN is handed over, the UE can use the same new key as that used in the new cell of the SN to perform data transmission with the new cell.

In an embodiment, sending the secondary node key modification indication information to the secondary node includes in response to receiving secondary node key modification request information, sending the secondary node key modification indication information to the secondary node; or in response to satisfying a master node key update condition, sending the secondary node key modification indication information to the secondary node.

In this embodiment, the master node key update condition may be understood as a condition preset according to actual situations and configured to trigger the MN to perform key updating for the SN that is currently in communication in the dual connectivity scenario. By way of example, the master node key update condition includes access stratum key updating or expiration of a key lifetime and may also be another condition for triggering MN key updating. This is not limited in each embodiment of the present application.

Specifically, the triggering of the MN sending the secondary node key modification indication information to the SN can be divided into two cases. In one case, in a case where the SN determines that SN key modification is required, the SN sends the secondary node key modification request information carrying the key update indication to the MN; and after receiving the secondary node key modification request information, the MN determines a new key required by the SN in response to the key update indication and sends the secondary node key modification indication information carrying the new key and the cell handover indication to the SN. In another case, in a case where the MN determines that SN key modification is required, the MN generates a new key to be replaced for the SN and sends the secondary node key modification indication information carrying the new key and the cell handover indication to the SN. In this case, it may be considered that in a case where the master node key update condition is satisfied, the MN is required to perform SN key modification.

In an embodiment, constructing the radio resource connection configuration information according to the secondary node key modification response information includes constructing the radio resource connection configuration information according to a secondary node counter and target cell configuration information in the secondary node key modification response information.

Specifically, the secondary node key modification response information includes the target cell configuration information for accessing the cell to which the SN is handed over. Since the updated key of the SN is constructed by the MN based on the MN key and the SN counter corresponding to the current SN key modification and since the UE shares the key with the MN, the MN is only required to write the SN counter and the target cell configuration information into the constructed radio resource connection configuration information. In this manner, after receiving the radio resource connection configuration information, the UE can construct the updated key of the SN based on the SN counter and the key shared with the MN and then, after completing cell handover according to the target cell configuration information, perform data transmission with the new cell of the SN using the constructed new key.

The wireless communication method of this embodiment of the present application enables the master node in a dual connectivity communication scenario to send the secondary node key modification indication information to the corresponding secondary node in a case where the master node determines that key switching is required for the secondary node so that key modification and cell handover of the secondary node can be performed. Then, after receiving the secondary node key modification response information returned by the secondary node after cell handover and key updating in response to the secondary node key modification indication information, the master node generates the radio resource connection configuration information for enabling the UE corresponding to the secondary node to perform cell handover and key updating; sends the radio resource connection configuration information to the corresponding UE to enable the UE to complete cell handover corresponding to the secondary node; and modifies the key to the new key of the cell corresponding to the secondary node to enable data transmission using the new key. Cell handover is associated with a corresponding information buffering mechanism. Therefore, during key switching of the secondary node, interruption of traffic data in transmission does not occur, thereby avoiding traffic interruption in communication between the secondary node and the UE caused by key switching. Moreover, during key updating of the secondary node, the UE performs only one cell handover and one key update, thereby achieving UE-transparent secondary node key switching in dual connectivity communication and improving the system communication stability.

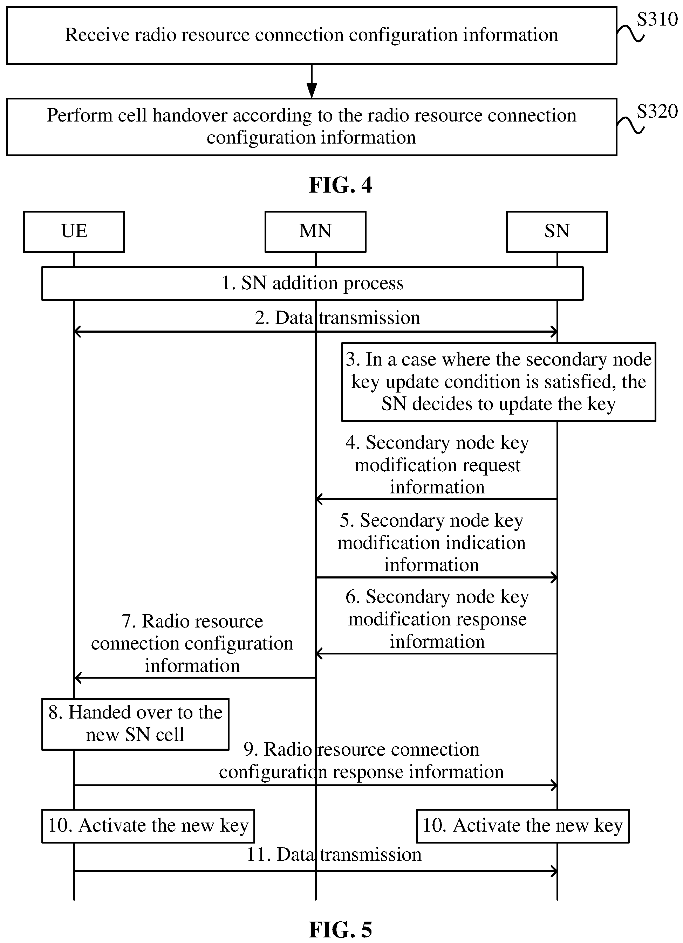

In an example embodiment, FIG. 4 is a flowchart of a wireless communication method according to embodiments of the present application. The method is applicable to SN key updating in a dual connectivity scenario. The method can be performed by a wireless communication apparatus. The apparatus may be implemented by software and/or hardware and integrated in a communication node. For example, the communication node may be a wireless communication device as a UE in the dual connectivity communication scenario.

As shown in FIG. 4, the wireless communication method of this embodiment of the present application includes S310-S320.

In S310, radio resource connection configuration information is received.

The radio resource connection configuration information is information constructed by a master node according to secondary node key modification response information and a secondary node counter.

The secondary node key modification response information is response information sent after a secondary node performs cell handover according to secondary node key modification indication information. The secondary node key modification response information includes target cell configuration information.

Specifically, if key modification for the SN is required, the MN sends the secondary node key modification indication information to the SN. After performing cell handover and key modification according to the secondary node key modification indication information, the SN feeds back to the MN the secondary node key modification response information that includes the target cell configuration information required for accessing the post-handover cell. Accordingly, the MN constructs the radio resource connection configuration information according to the target cell configuration information in the secondary node key modification response information and the secondary node counter used by the MN to generate a new key for the SN and sends the radio resource connection configuration information to the corresponding UE so that the UE can reconfigure its own communication state after receiving the radio resource connection configuration information.

In S320, cell handover is performed according to the radio resource connection configuration information.

Specifically, after parsing the received radio resource connection configuration information, the UE can determine that the radio resource connection configuration information includes target cell configuration information and can thereby identify the information required for the UE to access the SN cell in subsequent communication. Accordingly, the UE can be handed over to the corresponding SN cell according to the target cell configuration information in the radio resource connection configuration information. This cell is the cell to which the SN is handed over according to the secondary node key modification indication information.

In an embodiment, performing the cell handover according to the radio resource connection configuration information includes determining a target cell according to the target cell configuration information in the radio resource connection configuration information; and performing handover to the target cell.

Specifically, after parsing the radio resource connection configuration information, the UE can obtain the target cell configuration information. Since the target cell configuration information includes information required for accessing the corresponding cell, such as an identity (ID), the cell corresponding to the target cell configuration information can be determined as the target cell, so that the UE can perform cell handover to the target cell according to the information required for accessing the cell.

In an embodiment, after performing the cell handover according to the radio resource connection configuration information, the method also includes sending radio resource connection configuration response information to the secondary node; and activating a key corresponding to the secondary node and determined according to the secondary node counter in the radio resource connection configuration information to enable data transmission with the secondary node based on the key.

In this embodiment, the radio resource connection configuration response information may be understood as response information sent by the UE to the corresponding SN to indicate that the UE has been handed over to the target cell of the SN and can perform data transmission with the SN using the updated key of the SN.

Specifically, to establish communication and connection between the UE and the new cell of the SN, after completing the cell handover according to the radio resource connection configuration information, the UE is required to generate the radio resource connection configuration response information corresponding to the radio resource connection configuration information and send the radio resource connection configuration response information to the SN. Since a new key is used in the new cell of the SN, before the UE and the SN perform data transmission based on the new cell, the UE is required to determine, according to the SN counter in the radio resource connection configuration information, the new key corresponding to the new cell of the SN and activate the new key in both the UE and the SN so that the UE can perform data transmission with the SN based on the new key.

The wireless communication method of this embodiment of the present application enables a UE in a dual connectivity scenario to switch, upon receiving the radio resource control configuration information sent by the MN, to a post-handover target cell after an SN key update to enable the UE to perform data transmission, in the target cell, with the SN that completes key modification and cell handover. Cell handover is associated with a corresponding information buffering mechanism. The UE performs cell handover based on the radio resource control configuration information provided after the SN completes key update and cell handover. Therefore, in a case where the UE is switching to the new cell of the secondary node, the UE can not only achieve key updating under the new cell, but also does not cause interruption of traffic data in transmission due to key updating and cell updating, thereby avoiding traffic interruption in communication between the secondary node and the UE caused by key switching. Moreover, during key updating of the secondary node, the UE performs only one cell handover and one key update, thereby achieving UE-transparent secondary node key switching in dual connectivity communication and improving the system communication stability.

The following embodiments provide an example description of the present application and illustrate the SN key updating and wireless communication process.

### Embodiment one

FIG. 5 is a flowchart of wireless communication for a key update initiated by a secondary node according to embodiments of the present application. As shown in FIG. 5, dual connectivity communication involves three parties, namely the MN, the SN, and the UE. The wireless communication process in which the SN initiates key updating is as follows:
1. Before put-into-operation, an SN addition process is completed between the UE, the MN, and the SN so that a link between the UE and the SN is established.
2. Data transmission is performed between the UE and the SN.
3. In a case where the secondary node key update condition is satisfied, the SN determines to update the key. During data transmission between the UE and the SN, the PDCP COUNT value gradually increases. Using a 5G network as an example, the PDCP COUNT value is 32 bits. Therefore, as the PDCP COUNT value increases, the PDCP COUNT undergoes rollover. The imminent rollover of the PDCP COUNT may be determined as the secondary node key update condition.
4. The SN sends secondary node key modification request information to the MN. The secondary node key modification request information carries a key update indication that indicates that the SN requires a new key.
5. The MN sends secondary node key modification indication information to the SN. The secondary node key modification indication information carries a new key and a cell handover indication. The cell handover indication instructs the SN to perform cell handover and communicate with the UE using the new key after the cell handover.
6. The SN replies to the MN with secondary node key modification response information. The secondary node key modification response information includes a cell handover indication response and includes information required for accessing the new cell of the SN, such as a new cell identifier.
7. The MN sends radio resource connection configuration information to the UE. The radio resource connection configuration information includes an SN counter and the information received in step 6 and required for accessing the new cell of the SN.
8. The UE is handed over to the new cell of the SN.
9. The UE sends radio resource connection configuration response information to the SN.
10. The UE and the SN activate the new key. After the new key is activated, the PDCP COUNT is reset.
11. The UE and the SN perform data transmission based on the new key.

### Embodiment two

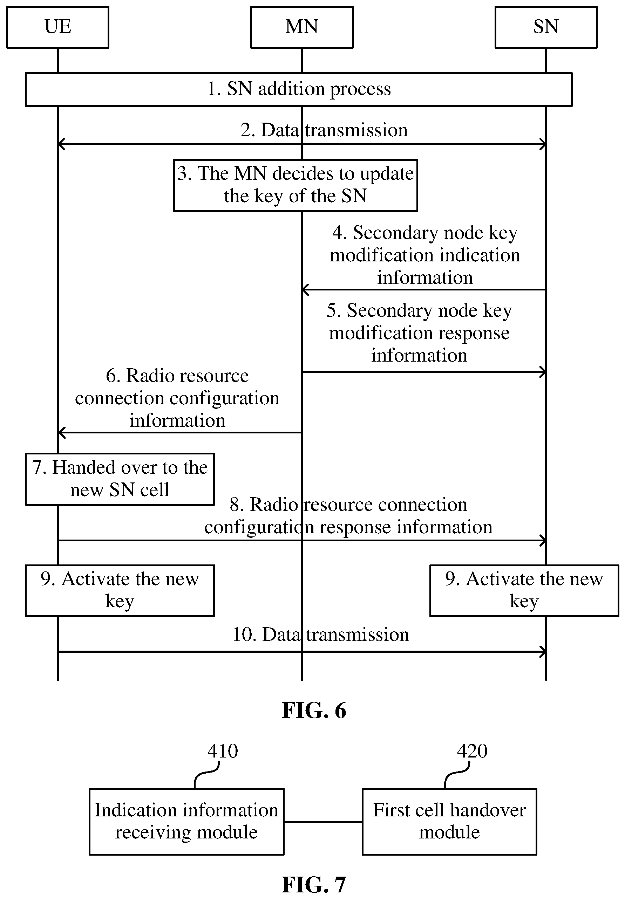

FIG. 6 is a flowchart of wireless communication for a key update initiated by a master node according to embodiments of the present application. As shown in FIG. 6, dual connectivity communication involves three parties, namely the UE, the MN, and the SN. The wireless communication process in which the MN initiates key updating is as follows:
1. Before put-into-operation, an SN addition process is completed between the UE, the MN, and the SN so that a link between the UE and the SN is established.
2. Data transmission is performed between the UE and the SN.
3. During data transmission between the UE and the SN, the MN may decide to update the SN key for various reasons. These reasons may be collectively referred to as the master node key update condition. For example, in a case where the MN updates its access stratum key, the SN key updating is required, or in a case where the MN determines that the SN key has exceeded the key lifetime, the SN key updating is required. This is not limited in this embodiment of the present application.
4. The MN sends secondary node key modification indication information to the SN. The secondary node key modification indication information carries a new key and a cell handover indication.
5. The SN replies to the MN with secondary node key modification response information. The secondary node key modification response information includes a cell handover indication response and includes information required for accessing the new cell of the SN.
6. The MN sends radio resource connection configuration information to the UE. The radio resource connection configuration information includes an SN counter and the information received in step 5 and required for accessing the new cell of the SN.
7. The UE is handed over to the new cell of the SN.
8. The UE sends radio resource connection configuration response information to the SN.
9. The UE and the SN activate the new key. After the new key is activated, the PDCP COUNT is reset.
10. The UE and the SN perform data transmission based on the new key.

In an example embodiment, FIG. 7 is a diagram illustrating the structure of a wireless communication apparatus according to embodiments of the present application. The apparatus is applied to a secondary node in dual connectivity communication. As shown in FIG. 7, the apparatus includes an indication information receiving module 410 and a first cell handover module 420.

The indication information receiving module 410 is configured to receive secondary node key modification indication information.

The first cell handover module 420 is configured to perform cell handover according to the secondary node key modification indication information.

According to the wireless communication apparatus of this embodiment of the present application, in a case where key switching is required for the secondary node in a dual connectivity communication scenario, key modification and cell handover for the secondary node are performed according to the received secondary node key modification indication information. Since cell handover is associated with a corresponding information buffering mechanism, ongoing traffic data transmission is not interrupted during key switching of the secondary node. This avoids traffic interruption in communication between the secondary node and the UE caused by key switching, achieves UE-transparent secondary node key switching in dual connectivity communication, and improves the system communication stability.

In an embodiment, before the indication information receiving module 410 is configured to receive the secondary node key modification indication information, the apparatus also includes a module configured to send secondary node key modification request information to a master node.

In an embodiment, the module is configured to send the secondary node key modification request information to the master node by sending the secondary node key modification request information to the master node in response to satisfying a secondary node key update condition.

In an embodiment, the first cell handover module 420 is configured to perform the cell handover according to the secondary node key modification indication information by performing the cell handover according to a cell handover indication in the secondary node key modification indication information.

In an embodiment, after first cell handover module 420 performs the cell handover according to the secondary node key modification indication information, the apparatus also includes a module configured to determine a post-handover cell as a target cell; and generate secondary node key modification response information according to the target cell and sending the key modification response information to the master node to enable the master node to configure radio resource connection for a terminal device corresponding to the secondary node according to the secondary node key modification response information.

In an embodiment, the secondary node key modification response information includes target cell configuration information for accessing the target cell.

In an embodiment, after the module sends the key modification response information to the master node, the apparatus also includes a module configured to, in response to receiving radio resource connection configuration response information from the terminal device, activate a new secondary node key in the secondary node key modification indication information to enable data transmission with the terminal device based on the new secondary node key.

In an embodiment, the secondary node key update condition includes that a Packet Data Convergence Protocol (PDCP) count is greater than a preset rollover threshold.

The wireless communication apparatus of this embodiment is based on the same inventive concept as the wireless communication method of any previous embodiment. For technical details not described in detail here, see any previous embodiment. Moreover, this embodiment achieves the same beneficial effects as the wireless communication method.

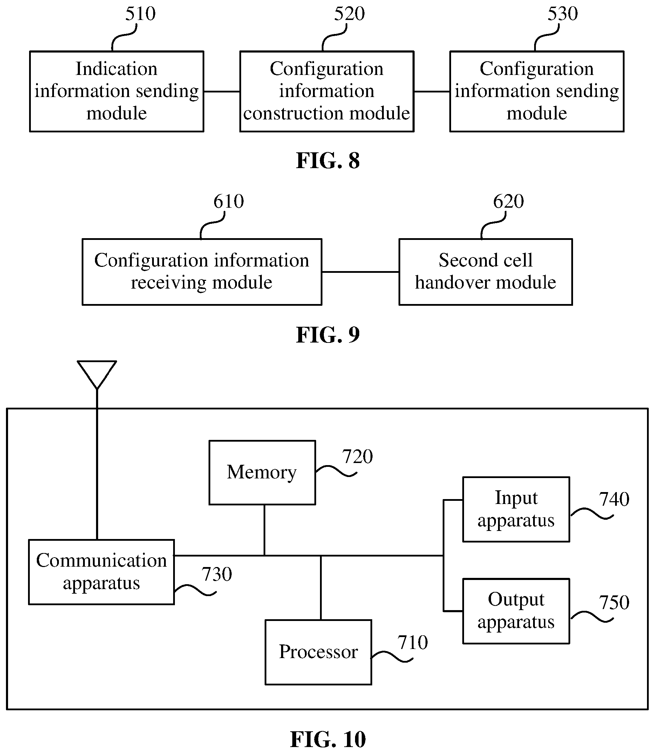

In an example embodiment, FIG. 8 is a diagram illustrating the structure of a wireless communication apparatus according to embodiments of the present application. The apparatus is applied to a master node in dual connectivity communication. As shown in FIG. 8, the apparatus includes an indication information sending module 510, a configuration information construction module 520, and a configuration information sending module 530.

The indication information sending module 510 is configured to send secondary node key modification indication information to a secondary node to enable the secondary node to perform cell handover according to the secondary node key modification indication information.

The configuration information construction module 520 is configured to receive secondary node key modification response information and construct radio resource connection configuration information according to the secondary node key modification response information.

The configuration information sending module 530 is configured to send the radio resource connection configuration information to a terminal device corresponding to the secondary node to enable the terminal device to be handed over to a post-handover cell of the secondary node according to the radio resource connection configuration information.

The wireless communication apparatus of this embodiment of the present application enables the master node in a dual connectivity communication scenario to send the secondary node key modification indication information to the corresponding secondary node in a case where the master node determines that key switching is required for the secondary node so that key modification and cell handover of the secondary node can be performed. Then, after receiving the secondary node key modification response information returned by the secondary node after cell handover and key updating in response to the secondary node key modification indication information, the master node generates the radio resource connection configuration information for enabling the UE corresponding to the secondary node to perform cell handover and key updating; sends the radio resource connection configuration information to the corresponding UE to enable the UE to complete cell handover corresponding to the secondary node; and modifies the key to the new key of the cell corresponding to the secondary node to enable data transmission using the new key. Cell handover is associated with a corresponding information buffering mechanism. Therefore, during key switching of the secondary node, interruption of traffic data in transmission does not occur, thereby avoiding traffic interruption in communication between the secondary node and the UE caused by key switching. Moreover, during key updating of the secondary node, the UE performs only one cell handover and one key update, thereby achieving UE-transparent secondary node key switching in dual connectivity communication and improving the system communication stability.

In an embodiment, sending the secondary node key modification indication information to the secondary node includes in response to receiving secondary node key modification request information, sending the secondary node key modification indication information to the secondary node; or in response to satisfying a master node key update condition, sending the secondary node key modification indication information to the secondary node.

In an embodiment, constructing the radio resource connection configuration information according to the secondary node key modification response information includes constructing the radio resource connection configuration information according to a secondary node counter and target cell configuration information in the secondary node key modification response information.

In an embodiment, the master node key update condition includes access stratum key updating or expiration of a key lifetime.

The wireless communication apparatus of this embodiment is based on the same inventive concept as the wireless communication method of any previous embodiment. For technical details not described in detail here, see any previous embodiment. Moreover, this embodiment achieves the same beneficial effects as the wireless communication method.

In an example embodiment, FIG. 9 is a diagram illustrating the structure of a wireless communication apparatus according to embodiments of the present application. The apparatus is applied to a terminal device in dual connectivity communication. As shown in FIG. 9, the apparatus includes a configuration information receiving module 610 and a second cell handover module 620.

The configuration information receiving module 610 is configured to receive radio resource connection configuration information.

The second cell handover module 620 is configured to perform cell handover according to the radio resource connection configuration information.

The radio resource connection configuration information is information constructed by a master node according to secondary node key modification response information and a secondary node counter. The secondary node key modification response information is response information sent after a secondary node performs cell handover according to secondary node key modification indication information. The secondary node key modification response information includes target cell configuration information.

The wireless communication apparatus of this embodiment of the present application enables a UE in a dual connectivity scenario to switch, upon receiving the radio resource control configuration information sent by the MN, to a post-handover target cell after an SN key update to enable the UE to perform data transmission, in the target cell, with the SN that completes key modification and cell handover. Cell handover is associated with a corresponding information buffering mechanism. The UE performs cell handover based on the radio resource control configuration information provided after the SN completes key update and cell handover. Therefore, in a case where the UE is switching to the new cell of the secondary node, the UE can not only achieve key updating under the new cell, but also does not cause interruption of traffic data in transmission due to key updating and cell updating, thereby avoiding traffic interruption in communication between the secondary node and the UE caused by key switching. Moreover, during key updating of the secondary node, the UE performs only one cell handover and one key update, thereby achieving UE-transparent secondary node key switching in dual connectivity communication and improving the system communication stability.

In an embodiment, performing the cell handover according to the radio resource connection configuration information includes determining a target cell according to the target cell configuration information in the radio resource connection configuration information; and performing handover to the target cell.

In an embodiment, after performing the cell handover according to the radio resource connection configuration information, the method also includes sending radio resource connection configuration response information to the secondary node; and activating a key corresponding to the secondary node and determined according to the secondary node counter in the radio resource connection configuration information to enable data transmission with the secondary node based on the key.

The wireless communication apparatus of this embodiment is based on the same inventive concept as the wireless communication method of any previous embodiment. For technical details not described in detail here, see any previous embodiment. Moreover, this embodiment achieves the same beneficial effects as the wireless communication method.

Embodiments of the present application also provide a communication node. FIG. 10 is a diagram illustrating the structure of a communication node according to embodiments of the present application. As shown in FIG. 10, the communication node of this embodiment of the present application includes a memory 720, a processor 710, and a computer program stored in the memory and executable on the processor. The processor 710 is configured to perform the wireless communication method when executing the computer program.

The communication node may also include a memory 720. One or more processors 710 may be provided in the communication node. FIG. 10 illustrates one processor 710 by way of example. The memory 720 is configured to store one or more programs. When executed by the one or more processors 710, the one or more programs cause the one or more processors 710 to perform the wireless communication method of any embodiment of the present application.

The communication node also includes a communication apparatus 730, an input apparatus 740, and an output apparatus 750.

The processor 710, the memory 720, the communication apparatus 730, the input apparatus 740, and the output apparatus 750 in the communication node may be connected via a bus or in other manners, and the connection via a bus is shown as an example in FIG. 10.

The input apparatus 740 may be configured to receive inputted digital or character information and generate key signal input related to user settings and function control of the communication node. The output apparatus 750 may include a display device such as a display screen.

The communication apparatus 730 may include a receiver and a sender. The communication apparatus 730 is configured to perform information transceiving communication under the control of the processor 710.

As a computer-readable storage medium, the memory 720 may be configured to store software programs, computer-executable programs, and modules such as program instructions/modules corresponding to the wireless communication method of any embodiment of the present application (for example, the indication information receiving module 410 and the first cell handover module 420 in the wireless communication apparatus; or the indication information sending module 510, the configuration information construction module 520, and the configuration information sending module 530 in the wireless communication apparatus; or the configuration information receiving module 610 and the second cell handover module 620 in the wireless communication apparatus). The memory 720 may include a program storage region and a data storage region, where the program storage region may store an operating system and an application program required by at least one function, and the data storage region may store data and the like created according to the use of the communication node. Additionally, the memory 720 may include a high-speed random-access memory and may also include a nonvolatile memory such as at least one disk memory, a flash memory, or another nonvolatile solid-state memory. In some examples, the memory 720 may also include memories remote relative to the processor 710 and accessible to the communication node via a network. Examples of the network include, but are not limited to, the Internet, an intranet, a local area network, a mobile communication network, and a combination thereof.

Embodiments of the present application also provide a storage medium storing a computer program. When executed by a processor, the computer program causes the processor to perform the wireless communication method of any embodiment of the present application.

Optionally, the wireless communication method is applied to a secondary node in dual connectivity communication. The wireless communication method applied to the secondary node includes receiving secondary node key modification indication information; and performing cell handover according to the secondary node key modification indication information.

Optionally, the wireless communication method is applied to a master node in dual connectivity communication. The wireless communication method applied to the master node includes sending secondary node key modification indication information to a secondary node to enable the secondary node to perform cell handover according to the secondary node key modification indication information; receiving secondary node key modification response information and constructing radio resource connection configuration information according to the secondary node key modification response information; and sending the radio resource connection configuration information to a terminal device corresponding to the secondary node to enable the terminal device to be handed over to a post-handover cell of the secondary node according to the radio resource connection configuration information.

Optionally, the wireless communication method is applied to a terminal device in dual connectivity communication. The wireless communication method applied to the terminal device includes receiving radio resource connection configuration information; and performing cell handover according to the radio resource connection configuration information. The radio resource connection configuration information is information constructed by a master node according to secondary node key modification response information and a secondary node counter. The secondary node key modification response information is response information sent after a secondary node performs cell handover according to secondary node key modification indication information. The secondary node key modification response information includes target cell configuration information.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may also include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). The computer-readable medium may include a non-transitory storage medium. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A wireless communication method, applied to a secondary node in dual connectivity communication, comprising:
receiving secondary node key modification indication information; and
performing cell handover according to the secondary node key modification indication information.

2. The wireless communication method of claim 1, before receiving the secondary node key modification indication information, further comprising:
sending secondary node key modification request information to a master node.

3. The wireless communication method of claim 2, wherein sending the secondary node key modification request information to the master node comprises:
in response to satisfying a secondary node key update condition, sending the secondary node key modification request information to the master node.

4. The wireless communication method of claim 1, wherein performing the cell handover according to the secondary node key modification indication information comprises:
performing the cell handover according to a cell handover indication in the secondary node key modification indication information.

5. The wireless communication method of claim 1, after performing the cell handover according to the secondary node key modification indication information, further comprising:
determining a post-handover cell as a target cell; and
generating secondary node key modification response information according to the target cell and sending the secondary node key modification response information to the master node to enable the master node to configure radio resource connection for a terminal device corresponding to the secondary node according to the secondary node key modification response information.

6. The wireless communication method of claim 5, wherein the secondary node key modification response information comprises target cell configuration information for accessing the target cell.

7. The wireless communication method of claim 5, after sending the key modification response information to the master node, further comprising:
in response to receiving radio resource connection configuration response information from the terminal device, activating a new secondary node key in the secondary node key modification indication information to enable data transmission with the terminal device according to the new secondary node key.

8. The wireless communication method of any one of claims 3 to 7, wherein the secondary node key update condition comprises that a Packet Data Convergence Protocol, PDCP, count is greater than a preset rollover threshold.

9. A wireless communication method, applied to a master node in dual connectivity communication, comprising:
sending secondary node key modification indication information to a secondary node to enable the secondary node to perform cell handover according to the secondary node key modification indication information;
receiving secondary node key modification response information and constructing radio resource connection configuration information according to the secondary node key modification response information; and
sending the radio resource connection configuration information to a terminal device corresponding to the secondary node to enable the terminal device to be handed over to a post-handover cell of the secondary node according to the radio resource connection configuration information.

10. The wireless communication method of claim 9, wherein sending the secondary node key modification indication information to the secondary node comprises:
in response to receiving secondary node key modification request information, sending the secondary node key modification indication information to the secondary node; or
in response to satisfying a master node key update condition, sending the secondary node key modification indication information to the secondary node.

11. The wireless communication method of claim 9, wherein constructing the radio resource connection configuration information according to the secondary node key modification response information comprises:
constructing the radio resource connection configuration information according to a secondary node counter and target cell configuration information in the secondary node key modification response information.

12. The wireless communication method of claim 10, wherein the master node key update condition comprises access stratum key updating or expiration of a key lifetime.

13. A wireless communication method, applied to a terminal device in dual connectivity communication, comprising:
receiving radio resource connection configuration information; and
performing cell handover according to the radio resource connection configuration information;
wherein the radio resource connection configuration information is information constructed by a master node according to secondary node key modification response information and a secondary node counter; and
wherein the secondary node key modification response information is response information sent after a secondary node performs cell handover according to secondary node key modification indication information, and the secondary node key modification response information comprises target cell configuration information.

14. The wireless communication method of claim 13, wherein performing the cell handover according to the radio resource connection configuration information comprises:
determining a target cell according to the target cell configuration information in the radio resource connection configuration information; and
performing handover to the target cell.

15. The wireless communication method of claim 13, after performing the cell handover according to the radio resource connection configuration information, the method further comprising:
sending radio resource connection configuration response information to the secondary node; and
activating a key corresponding to the secondary node and determined according to the secondary node counter in the radio resource connection configuration information to enable data transmission with the secondary node based on the key.

16. A wireless communication apparatus, applied to a secondary node in dual connectivity communication, comprising:
an indication information receiving module configured to receive secondary node key modification indication information; and
a first cell handover module configured to perform cell handover according to the secondary node key modification indication information.

17. A wireless communication apparatus, applied to a master node in dual connectivity communication, comprising:
an indication information sending module configured to send secondary node key modification indication information to a secondary node to enable the secondary node to perform cell handover according to the secondary node key modification indication information;
a configuration information construction module configured to receive secondary node key modification response information and construct radio resource connection configuration information according to the secondary node key modification response information; and
a configuration information sending module configured to send the radio resource connection configuration information to a terminal device corresponding to the secondary node to enable the terminal device to be handed over to a post-handover cell of the secondary node according to the radio resource connection configuration information.

18. A wireless communication apparatus, applied to a terminal device in dual connectivity communication, comprising:
a configuration information receiving module configured to receive radio resource connection configuration information; and
a second cell handover module configured to perform cell handover according to the radio resource connection configuration information;
wherein the radio resource connection configuration information is information constructed by a master node according to secondary node key modification response information and a secondary node counter; and
wherein the secondary node key modification response information is response information sent after a secondary node performs cell handover according to secondary node key modification indication information, and the secondary node key modification response information comprises target cell configuration information.

19. A communication node, comprising a memory, a processor, a program stored in the memory and executable on the processor, and a data bus for implementation of connection and communication between the processor and the memory, wherein when executed by the processor, the program causes the processor to perform the wireless communication method of any one of claims 1 to 15.

20. A storage medium for computer-readable storage, wherein the storage medium stores at least one program executable by at least one processor to cause the at least one processor to perform the wireless communication method of any one of claims 1 to 15.
